# EUROPÄISCHE PATENTSCHRIFT

(11) **EP 0 879 406 B1**
(45) Veröffentlichungstag und Bekanntmachung des Hinweises auf die Patenterteilung: **01.10.2003**
(21) Anmeldenummer: 97904392.4
(22) Anmeldetag: 07.02.1997
(51) Int. Cl.: G01M 3/18, G01M 3/00

(54) **VORRICHTUNG ZUR LECKERFASSUNG BEI ROHRLEITUNGEN**
DEVICE FOR DETECTING LEAKS IN PIPELINES
PROCEDE DE DETECTION DE FUITES DANS DES CONDUITES

(30) Priorität: 10.02.1996 DE 19604821
(43) Veröffentlichungstag der Anmeldung: 25.11.1998
(73) Patentinhaber: Michael Hesky GmbH, 65606 Villmar (DE)
(72) Erfinder: HESKY, Michael, D-65606 Villmar (DE)
(74) Vertreter: Blumbach, Kramer & Partner GbR
(86) Internationale Anmeldenummer: EP9700560
(87) Internationale Veröffentlichungsnummer: WO97029351

(56) Entgegenhaltungen:
- DE-C- 4 000 699
- US-A- 4 377 733
- PATENT ABSTRACTS OF JAPAN vol. 012, no. 104 (P-685), 6.April 1988 & JP 62 237337 A (TOSHIBA CORP;OTHERS: 01), 17.Oktober 1987,

## Beschreibung

### Gebiet der Erfindung

Die Erfindung betrifft eine Rohrleitung mit Vorrichtung zur Zustandserfassung, insbesondere Leckerfassung, sowie eine Vorrichtung zur Zustandserfassung von Feuchtigkeit und/oder Temperatur in der Wärmeisolationsschicht einer Rohrleitung.

### Hintergrund der Erfindung

Bei der Überwachung der Temperatur von Kochgut in einem Mikrowellenofen ist es bekannt (US-A-4 377 733) eine Temperatursonde zu verwenden, die einen LC-Schwingkreis umfaßt, dessen Resonanzfrequenz sich mit der Temperatur ändert. Dem LC-Schwingkreis wird über eine Mikrowellen-Antenne elektromagnetische Strahlung zugeführt und die detektierte Resonanzfrequenz wird als Temperaturmaß benutzt. Die Mikrowellen-Antenne befindet sich in der Nähe der Sonde und bildet mit dieser eine drahtlose Informationsübermittlungsstrecke, über welche die Temperaturinformation von der Sonde zur Elektronik des Mikrowellenofens für Regel- bzw. Anzeigezwecke übermittelt wird. Das Dokument regt nicht zur Anwendung auf dem Gebiet der Rohrleitungsüberwachung an, zumal sie einen innerhalb des Ofens angeordneten Heizstab als Antenne zur Zusammenarbeit mit der Sonde offenbart.

Es ist auch bereits ein Verfahren zur Lokalisierung einer Leckage an einer Rohrleitung bekanntgeworden (DE-A-40 00 699), wobei die Atmosphäre zwischen Rohrleitung und Rohrleitungsumhüllung mittels eines Infrarotstahlers und eines Infrarotstrahlungsempfängers überwacht wird.

Bei gebauten Fernwärmeanlagen erfolgt eine Leckmeldung einschließlich einer Leckortung mit Hilfe von metallischen Leitern, die in die Wärmeisolation der Rohrleitungen eingebettet sind (DE 579 184, 637 703, 1 814 857, 2 337 983). Bei Auftreten eines Lecks kann dann durch eine Widerstandsmessung oder auch eine Laufzeitmessung der Fehlerort festgestellt werden. Die metallischen Leiter aus Kupfer oder Ni/Cr werden bereits bei der Herstellung der einzelnen Rohrstücke ("Stangen") in die meist aus Polyurethan bestehende Wärmeisolation eingeschäumt, wobei gleichmäßige Abstände zum Mediumrohr einzuhalten sind, um vergleichbare Messungen zu erhalten. Während der Bauphase müssen im Bereich der Rohrverbindungsstellen (Muffen) nicht nur die Mediumrohre und die Schutz- oder Außenrohre miteinander verbunden werden, sondern auch die Leckmeldeleiter.

Das Leckmeldesystem mit Leitern hat auch gewisse Nachteile. Dazu zählt die Gefahr des Abreißens der Leiter, wenn die einzelnen Rohrstärken über Verbindungsmuffen durch Ausschäumen mit Polyurethanschaum verunden werden, weil verhältnismäßig hohe Temperaturen und verhältnismäßig große Kräfte innerhalb des Schaums auftreten. Ein weiterer Nachteil liegt im Anschließen von Batterien bzw. im erhöhten Energieverbrauch, wenn die Lecküberwachung ständig ausgeführt wird. In der Praxis wird deshalb intermittierend gearbeitet. Dies hat aber den Nachteile bei Rohrleitungen, die für Temperaturen oberhalb von 130° oder 140° C ausgelegt sind. Bei diesen verwendet man zusätzlich zur Wärmeisolierschicht aus Polyurethan eine aus Glasseide bestehende Isolierung, die direkt auf das Mediumrohr aufgebracht wird. Bei Auftreten eines Lecks kann dann das eingedrungene heiße Wasser sich sehr schnell in Längsrichtung ausbreiten, so daß in wenigen Minuten Rohrleitungsabschnitte von mehreren hundert Metern Länge geflutet werden. Die genaue Leckortung ist in einem solchen Fall nicht möglich.

### Zusammenfassung der Erfindung

Der Erfindung liegt demgemäß die Aufgabe zugrunde, ein System zur Leckerfassung und -ortung zu schaffen, bei dem die Probleme mit Leckmeldeleitungen in der Wärmeisolation vermieden und eine sichere und genaue Ortung von Leckstellen oder -bereichen ermöglicht wird. Die Lösung der Aufgabe ergibt sich aus Anspruch 1 bzw. 7.

Der bei der Erfindung verwendete Sensor arbeitet passiv mit einer Induktionsspule zusammen, somit ist keinerlei eingebaute Energiequelle, beispielsweise in Form einer Batterie, erforderlich. Auch müssen mehrere, über einen Rohrstrang verteilte Sensoren nicht untereinander über Leitungen verbunden sein, die in der Wärmeisolation verlaufen, so daß Probleme in Verbindung mit solchen Meldeleitern entfallen. Die Abfrageeinrichtung braucht nur mit Hilfe ihrer Erregerspule ein Magnetfeld in das Rohr einstrahlen, dessen Frequenz zweckmäßig auf die Resonanzfrequenz der Induktionsspule in dem Sensor abgestimmt ist oder auch ein Vielfaches hiervon betragen kann. Zur Erzielung einer vorbestimmten Resonanzfrequenz kann in dem Sensor ein gegebenenfalls einstellbarer Kondensator zur Induktionsspule parallelgeschaltet sein. Durch die Resonanz zwischen dem von der Abfrageeinrichtung abgestrahlten Magnetfeld und der Induktionsspule in dem Sensor wird dem abgestrahlten Magnetfeld Energie entzogen. Dieser Umstand kann im Sender detektiert und zur Ortung des Sensors benutzt werden.

Eine wesentlich höhere Empfindlichkeit mit zusätzlichen Vorteilen läßt sich erreichen, wenn nach einer Weiterbildung der Erfindung dem Sensor eine mit der Induktionsspule zusammenarbeitende, elektronische Auswerteeinheit mit einem Speicher und einer zugehörigen Schreib- und Leseschaltung zugeordnet ist. Die Abfrageeinheit weist zweckmäßig eine programmierbare Steuereinheit auf.
Über die Induktionsspule der Abfrageeinheit werden sowohl Sendenergie für den Sensor als auch Abfrage- und Programmiersignale übertragen. Der Sensor benötigt also keine eigene Stromquelle. In den Speicher des Sensors kann neben einer Information, die seinen Zustand wiedergibt, eine Identifikationsnummer im voraus oder auch nachträglich eingegeben werden, um den Einbauort des jeweiligen Sensors anzugeben. Es können auch weitere Informationen im Speicher abgelegt sein, beispielsweise die Entfernung und Himmelsrichtung zum nächsten Sensor. Bei der Abfrage mittels der Abfrageeinrichtung wird zunächst dem Sensor Energie zugeführt. Diese kann dann aktiv ihren Speicherinhalt aussenden, beispielsweise in Form codierter Impulse oder auch durch Modulation eines Trägersignals. Die Informationen werden von der Empfangsspule der Abfrageeinrichtung aufgenommen und durch den Empfänger an die programmierbare Steuereinheit gegeben und anschließend angezeigt. Die programmierbare Steuereinheit kann dabei in Form eines tragbaren Rechners (Laptop) ausgeführt sein.

Der Einsatz einer Vorrichtung nach der Erfindung ist besonders zweckmäßig für Rohrleitungen, die aus einer Vielzahl von Rohrstücken zusammengesetzt sind und jeweils durch eine an einem Ende jedes Rohrstücks vorgesehene Schottwand zwischen dem Mediumsrohr und dem Schutzrohr in abgedichtete Abschnitte unterteilt ist. Bei Auftreten eines Lecks beschränkt sich die Durchfeuchtung auf ein bzw. maximal zwei Rohrstücke, auch wenn das Leck nicht sofort repariert wird. (Bei ein Verwendung von Meldeleitern wird die Schottwand unterbrochen) Das System mit kontaktlosen Sensoren nach der vorliegenden Erfindung vermeidet solche Schwachpunkte. Benachbarte Rohrstücke werden jeweils über eine Muffe verbunden und am Ende jedes Rohrstückes ist je ein Sensor angeordnet.

Die Induktionsspule jedes Sensors wird zweckmäßig in der 12-Uhr-Position auf der Innenseite des Schutzrohrs so angeordnet, daß ihre magnetische Achse vertikal steht. Dann läßt sich eine maximale Kopplung zwischen der Spule in dem Sensor und der Spule in der Abfrageeinheit und damit eine gute Energie- und Signalübertragung erreichen. Die Induktionsspule selbst ist zweckmäßig eine Flachspule.

Der Sensor kann einen bei einer vorgegebenen Temperatur ansprechender Thermoschalter enthalten, beispielsweise einen Thermostat oder eine Thermosicherung. Eine solche Schalteinrichtung kann auch in Form eines durch eine Feder in einen Schaltzustand gedrängten Schalterkontaktes verwirklicht sein, wobei der Schalterkontakt durch eine bei Durchfeuchtung auslösende Einrichtung in den entgegengesetzten Schaltzustand geht. Zweckmäßig wird der Schalter durch einen Reed-Schalter verwirklicht, und die bei Durchfeuchtung auslösende Einrichtung enthält einen Betätigungsmagneten, der durch die Feder in eine erste, das Ansprechen des Reed-Schalters bewirkende Position gedrängt wird. Durch eine bei Durchfeuchtung wirkungslos werdende Einrichtung wird der Magnet gegen die Wirkung der Feder in einer zweiten, den Reed-Schalter nicht beeinflussenden Position gehalten. Die bei Durchfeuchtung wirkungslos werdende Einrichtung kann im einfachsten Fall eine Tablette aus wasserlöslichem Pulver sein, in die ein Faden eingebettet ist, der den Magneten gegen die Wirkung der Feder in der zweiten Position hält.

Der Schalter wird mit Vorteil in einem nicht vollständig abgedichteten Gehäuse angeordnet, das wenigstens teilweise mit einem Feuchtigkeit anziehenden Material, beispielsweise Silicagel, gefüllt ist. Dadurch wird verhindert, daß die nach dem Verlegen der Rohre vorhandene Restfeuchtigkeit schon zu einem Auslösen des Schalters führt.

### Figurenbeschreibung

Nachfolgend werden Ausführungsbeispiele der Erfindung anhand der Zeichnung beschrieben. Es zeigen:
- Fig. 1: eine Innenansicht des Schutzrohrs mit einer Sendeeinheit entsprechend I-I in Fig. 2 ;
- Fig. 2: einen Querschnitt einer Rohrleitung im Bereich einer Muffe;
- Fig. 3: ein Schaltbild mit einem weiteren Rohrquerschnitt und mit Schaltungskomponenten.

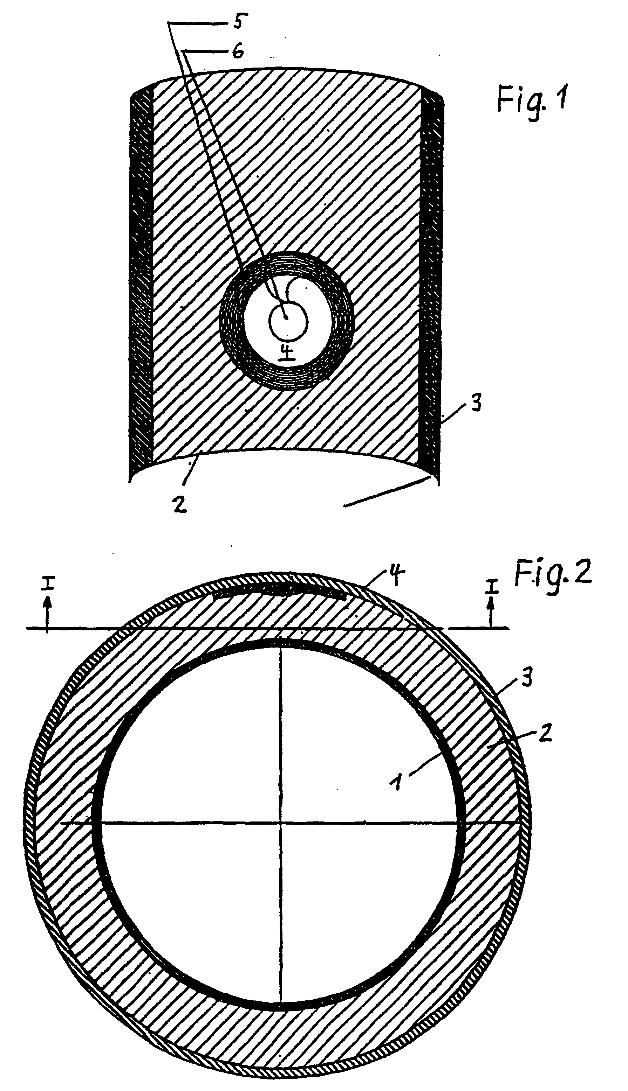

Der Querschnitt gemäß Fig. 2 zeigt eine Rohrleitung mit einem Medienrohr 1 aus beispielsweise Stahl, einer darauf folgenden Wärmeisolierschicht 2 aus Polyurethan-Schaumstoff und einem äußeren Schutzrohr 3 aus Polyethylen. In der 12-Uhr-Position ist eine Sensoreinheit 4 auf der Innenwand des Schutzrohres 3 angeordnet, beispielsweise verklebt. Die Sensoreinheit 4 weist eine Induktionsspule 5 auf, die mit einer elektronischen Auswerteeinheit 6 verbunden ist. Die Auswerteeinheit 6 enthält auch eine Schalteinrichtung, die temperatur- oder feuchtigkeitsabhängig schaltet. Die Sensoreinheit 4 wird im Bereich einer Muffenverbindung am Ende des Schutzrohrs angebracht und später nach dem Verschweißen der Medienrohre 1 eingeschäumt, wenn die Verbindungsmuffe durch Ausschäumen nachisoliert wird.

Die Sensoreinheit 4 braucht keine aktiven Bauelemente enthalten und kann deshalb auch bei recht hohen Schaumtemperaturen von über 150°C im Rohr miteingebaut werden.

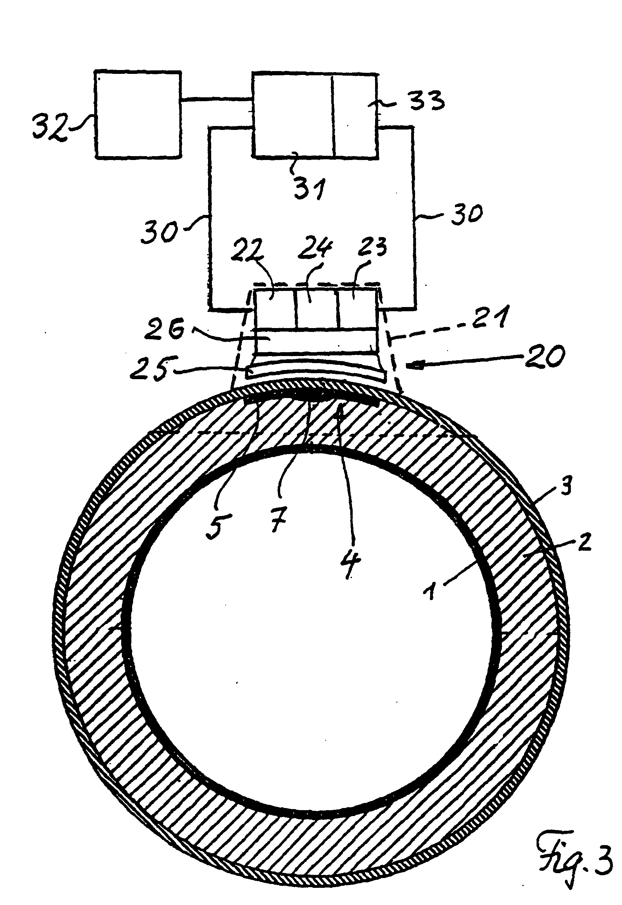

Fig. 3 zeigt ein Ausführungsbeispiel der Erfindung mit einer Abfrageeinrichtung 20, die außerhalb des Schutzrohres 3 in Überdeckung mit der Sensoreinheit 4 angeordnet ist. Die Abfrageeinrichtung 20 ist zweckmäßigerweise in einem an die Rohrkrümmung angepaßten Kapselgehäuse 21 untergebracht, das beispielsweise mittels Klebeband oder durch Verschweißung an dem äußeren Schutzrohr 3 befestigt ist. Die Abfrageeinrichtung 20 enthält Elektronikeinrichtungen mit Sender-Empfänger- und Auswerteteilen 22,23,24, einen Frequenzgenerator 26 und eine der Induktionsspule 5 entsprechende Erregerspule 25. Der Frequenzgenerator 26 kann durch einen freilaufenden LC-Oszillator oder durch einen durchstimmbaren Oszillator gebildet werden und ist über Leitungen mit der Erregerspule 25 verbunden. Die Abfrageeinrichtung 20 ist über ein Verbindungskabel 30 mit einer zentralen Auswerteeinrichtung 31 verbunden, an dem wiederum ein Personalcomputer 32 angeschlossen ist. Entsprechend der Vielzahl der Sensoren 4 gibt es eine Vielzahl von Abfrageeinrichtungen 20, die untereinander und mit dem zentralen Auswerteteil 31 über das Kabel 30 verbunden sind. Das Kabel 30 steht auch mit einer Stromversorgungseinrichtung 33 in Verbindung, um die für die Frequenzgeneratoren 26 benötigte Energie bereitzustellen. Bei großen Leitungslängen können mehrere Versorgungsteile 33 vorgesehen sein, um die Stromversorgung des Systems sicherzustellen.

Bei einem Ausführungsbeispiel bestand der Sensor 4 aus einem handelsüblichen Feuchtefühler 7, der seine Kapazität unter Einwirkung von Feuchtigkeit ändert, und einer Induktionsspule 5 mit ungefähr 100 Windungen und einem Durchmesser von etwa 10 cm. Der Feuchtefühler stellt einen Kondensator dar, der mit der Induktionsspule 5 verbunden ist, um einen Schwingkreis zu bilden.

Statt handelsüblicher Feuchtefühler können auch zwei Metallstreifen mit zwischengefügtem schaumförmigen Dialektikum zur Bildung eines Kondensators verwendet werden. Auch andere Einrichtungen zur Bildung eines Schwingkreises mit der Induktionsspule 5 sind brauchbar, die sich mit dem zu messenden Zustand ändern. Wie eingangs dargelegt, kann außer der Feuchtigkeit auch Temperatur gemessen werden.

Der Betrieb der Vorrichtung geht wie folgt vor sich: Von dem Zentralteil 31 werden in bestimmten zeitlichen Abständen Adressensignale über das als Bus wirkende Verbindungskabel 30 ausgesendet, wobei der Empfänger 23 einer bestimmten Abfrageeinrichtung 20 anspricht und den Frequenzgenerator 26 anschaltet, der die Erregerspule 25 mit einem Erregungssignal variabler Frequenz beaufschlagt. Mit der Erregerspule 25 wird ein elektromagnetisches Feld aufgebaut, das die Induktionsspule 5 erregt, wobei die Energieübertragung bei der Resonanzfrequenz ein Maximum erreicht, was durch den Auswerteteil 24 feststellbar ist. Über den Sendeteil 22 wird ein diesbezügliches Datensignal über diese Resonanzfrequenz der Zentraleinheit 31 mitgeteilt. Bei diesem Datensignal kann es sich um die heruntergeteilte Resonanzfrequenz handeln.

Wie ausgeführt, bilden die Induktionsspule 5 und der Feuchtefühler 7 einen Schwingkreis, dessen Resonanzfrequenz von der Feuchte abhängt, die der Feuchtefühler 7 feststellt. Demgemäß hängt àuch die Resonanzfrequenz von der detektierten Feuchte ab. Die Abhängigkeit zwischen Feuchte und Resonanzfrequenz ist zuvor empirisch ermittelt und tabellarisch in den Computer 32 eingegeben worden.

Die Zentraleinheit 31 steuert die einzelnen Abfrageeinrichtungen 20 nacheinander an und sammelt Daten, die dem PC 32 zur Verfügung gestellt werden. Die gesammelten Daten werden mit vorgegebenen Daten, die beispielsweise Alarmschwellen darstellen können, verglichen und zur Anzeige gebracht. Die Daten mit ihren Vergleichswerten können auch statistisch ausgewertet und beispielsweise mit Tabellenkalkulationsprogrammen weiter verarbeitet werden.

Während das beschriebene System mit Feuchtefühlern arbeitet, können auch andere physikalische Größen überwacht werden, beispielsweise die Temperatur, wenn entsprechende Temperaturdetektoren anstelle der Feuchtefühler 7 eingebaut werden.

## Patentansprüche

1. Rohrleitung mit Vorrichtung zur Zustandserfassung, insbesondere Leckerfassung, mit folgenden Merkmalen:
die Rohrleitung weist ein inneres Mediumrohr (1) zum Transport eines Mediums, wie Wasserdampf oder Heißwasser, eine Wärmeisolationsschicht (2) und ein äußeres Schutzrohr (3) auf,
wenigstens ein Sensor (4), der eine auf Feuchtigkeit und/oder Temperaturhöhe ansprechende Fühlereinrichtung (7) und eine Induktionsspule (5) umfaßt, ist im Bereich der Wärmeisolationsschicht (2) angeordnet;
die Fühlereinrichtung (7) und die Induktionsspule (5) bilden einen Schwingkreis, dessen Resonanz- und/oder Dämpfungseigenschaften von dem Zustand der Fühlereinrichtung (7) infolge der in der Wärmeisolationsschicht herrschenden Bedingungen wie Feuchtigkeit, Temperatur abhängen;
eine Abfrageeinrichtung (20), die einen Frequenzgenerator (26), eine Erregerspule (25) sowie eine Auswerteeinrichtung (24) umfaßt und in eine Lage nahe des Sensors (4) bringbar ist, um diesem elektromagnetische Strahlung zuzuführen, wobei die Resonanz- und/oder Dämpfungseigenschaften des Sensorschwingkreises detektiert werden.

2. Rohrleitung mit Vorrichtung zur Zustandserfassung nach Anspruch 1,
mit folgenden weiteren Merkmalen:
eine Vielzahl von Medienrohren (1); Wärmeisolierschichten (2) und Schutzrohre (3) sind zu wenigstens einer Leitungsstrecke verlegt, die eine Vielzahl von Sensoren (4) aufweist;
eine Vielzahl von Abfrageeinrichtungen (20), die miteinander und mit einer zentralen Auswerteeinrichtung (31) über Kabel (30) verbunden sind;
jede Abfrageeinrichtung (20) weist Sende- und Empfangseinrichtungen (22,23) sowie Speicher für eine individuelle Adresse auf;
die zentrale Auswerteeinrichtung (31) weist Mittel zum Aussenden individueller Adressen der Abfrageinrichtungen (20) auf;
die Adressenempfangseinrichtung (23) der adressierten Abfrageeinrichtung (20) ist in der Lage, den Frequenzgenerator (26) zu aktivieren, um der Erregerspule (25) der betreffenden Abfrageeinrichtung ein Erregungssignal mit veränderbarer Frequenz zuzuführen;
die Auswerteeinrichtung (24) der betreffenden Abfrageinrichtung (20) ist zum Ansprechen auf Resonanz zwischen Erregungsspule (25) und Induktionsspule (5) sowie zum Aktivieren der Sendeeinrichtung (22) eingerichtet.

3. Rohrleitung mit Vorrichtung zur Zustandserfassung nach Anspruch 2, wobei eine Speicher- und Verarbeitungseinrichtung (32) an die zentrale Auswerteeinrichtung (31) angeschlossen ist.

4. Rohrleitung mit Vorrichtung zur Zustandserfassung nach Anspruch 3, wobei die Speicher- und Verarbeitungseinrichtung (32) Vergleichs-einrichtungen aufweist, um von der zentralen Auswerteeinrichtung (31) zugeführte Daten mit Alarmschwellen zu vergleichen.

5. Rohrleitung mit Vorrichtung zur Zustandserfassung nach einem der Ansprüche 1 bis 4, wobei die Rohrleitung aus einer Vielzahl von Rohren zusammengesetzt ist und durch eine an einem Ende jedes Rohres vorgesehene Schottwand zwischen dem Medienrohr (1) und dem Schutzrohr (3) in abgedichtete Abschnitte unterteilt ist, und
wobei in jedem Abschnitt im Bereich einer Muffe zur Verbindung von zwei Rohren je eine Sensoreinheit (4) angeordnet ist.

6. Rohrleitung mit Vorrichtung zur Zustandserfassung nach einem der Ansprüche 1 bis 5,
**dadurch gekennzeichnet, daß** die Induktionsspule (5) jeder Sensoreinheit (4) in der 12-Uhr-Position auf der Innenseite des Schutzrohrs (3) so angeordnet ist, daß ihre magnetische Achse vertikal steht.

7. Vorrichtung zur Zustandserfassung von Feuchtigkeit und/oder Temperatur in der Wärmeisolationsschicht einer Rohrleitung, mit folgenden Merkmalen:
eine Fühlereinrichtung (7) ist zum Ansprechen auf Feuchtigkeit und/oder Temperaturhöhe ausgebildet und ändert dabei ihre elektrische Eigenschaft;
eine Induktionsspule (5) ist mit der Fühlereinrichtung (7) zu einem elektrischen Schwingkreis zusammengeschaltet, dessen Resonanz- und/oder Dämpfungseigenschaften von der elektrischen Eigenschaft der Fühlereinrichtung (7) abhängen;
Fühlereinrichtung (7) und Induktionsspule (5) bilden einen Sensor (4), der zur Zusammenarbeit mit einer Abfrageeinrichtung (20) des Zustandes des Sensors ausgebildet ist;
die Abfrageeinrichtung (20) umfaßt einen Frequenzgenerator (26), eine Erregerspule (25) sowie eine Auswerteeinrichtung (24), um durch Einstrahlung von elektromagnetischer Energie die Resonanz- und/oder Dämpfungseigenschaften des Sensorschwingkreises zu detektieren.

8. Vorrichtung nach Anspruch 7,
**dadurch gekennzeichnet, daß** die Induktionsspule (5) eine Flachspule ist.

9. Vorrichtung nach Anspruch 7 oder 8,
**dadurch gekennzeichnet, daß** jedem Sensor (4) ein Speicher mit einer die jeweilige Sensoreinheit identifizierenden Nummer zugeordnet ist.

10. Vorrichtung nach Anspruch 9, **dadurch gekennzeichnet, daß** die Fühlereinrichtung (7) als Schalteinrichtung ausgebildet ist, die bei oder nach ihrer Betätigung eine entsprechende Information in den Speicher einschreibt.

11. Vorrichtung nach einem der Ansprüche 7 bis 10,
**dadurch gekennzeichnet, daß** die Fühlereinrichtung (7) ein bei einer vorgegebenen Temperatur ansprechender Thermoschalter ist.

12. Vorrichtung nach einem der Ansprüche 7 bis 11,
**dadurch gekennzeichnet, daß** die Fühlereinrichtung (7) einen durch eine Feder in einen Schaltzustand gedrängten Schalter enthält und
daß eine bei Durchfeuchtung auslösende Einrichtung den Schalter im entgegengesetzten Schaltzustand hält.

13. Vorrichtung nach Anspruch 12, **dadurch gekennzeichnet, daß** der Schalter ein Reed-Schalter ist und die bei Durchfeuchtung auslösende Einrichtung einen Betätigungsmagneten aufweist, der durch die Feder in eine erste, das Ansprechen des Reed-Schalters bewirkende Position gedrängt wird, und durch eine bei Durchfeuchtung wirkungslos werdende Einrichtung gegen die Wirkung der Feder in einer zweiten, den Reed-Schalter nicht beeinflussenden Position gehalten wird.

14. Vorrichtung nach Anspruch 12 oder 13,
**dadurch gekennzeichnet, daß** der Schalter in einem nicht vollständig abgedichteten Gehäuse angeordnet ist, das wenigstens teilweise mit einem Feuchtigkeit anziehenden Material, insbesondere Silicagel, gefüllt ist.

15. Vorrichtung nach einem der Ansprüche 1 bis 8, **dadurch gekennzeichnet, daß** die Fühlereinrichtung (7) einen feuchtigkeitsabhängigen Kondensator umfaßt.

16. Vorrichtung nach Anspruch 7, **dadurch gekennzeichnet, daß** die Abfrageeinrichtung (20) als programmierbare Steuereinheit einen tragbaren Rechner aufweist.

## Claims

1. A pipeline including apparatus for status detection, in particular leak detection, comprising:
said pipeline having an inner medium-carrying pipe (1) for the transportation of a medium such as steam or hot water, a heat-insulating layer (2) and an outer protective tube (3),
at least one sensor (4) which includes sensor means (7) responsive to moisture and/or temperature level, and an induction coil (5) which is arranged in the region of the heat-insulating layer (2) ;
said sensor means (7) and said induction coil (5) . forming a resonating circuit having resonance and/or damping properties which depend on the state of said sensor means (7) as a result of conditions such as moisture and temperature prevailing in the heat-insulating layer; and
an interrogation device (20) which includes a frequency generator (26), an exciter coil (25) and an evaluation device (24) and can be brought into a position near the sensor (4) so as to feed electromagnetic radiation thereto, the resonance and/or damping properties of the sensor resonating circuit being detected.

2. The pipeline including status detection apparatus as set forth in claim 1 and further comprising:
a plurality of medium-carrying pipes (1);
heat-insulating layers (2) and protective tubes (3) being laid to form at least one pipeline run which includes a plurality of sensors (4);
a plurality of interrogation devices (20) which are connected to each other and to a central evaluation device (31) by way of cables (30);
each interrogation device (20) having transmitting and receiving devices (22, 23) and memories for an individual address;
said central evaluation device (31) having means for emitting individual addresses of the interrogation devices (20);
the address receiving device (23) of the respective addressed interrogation device (20) being capable of activating the frequency generator (26) in order to feed an excitation signal of variable frequency to the exciter coil (25) of the respective interrogation device; and
the evaluation device (24) of the respective interrogation device (20) being adapted to respond to resonance between
the excitation coil (25) and the induction coil (5) and to
activate the transmitting device (22).

3. The pipeline including status detection apparatus as set forth in claim 2,
wherein a storage and processing device (32) is connected to the central evaluation device (31).

4. The pipeline including status detection apparatus as set forth in claim 3,
wherein said storage and processing device (32) has comparison means for comparing data, supplied by the central evaluation device (31), to alarm thresholds.

5. The pipeline including status detection apparatus as set forth in one of claims 1 through 4,
wherein the pipeline is composed of a plurality of pipes and is subdivided into sealed-off sections by a partition wall provided at an end of each pipe between the medium-carrying pipe (1) and the protective tube (3), and
wherein a respective sensor unit (4) is arranged in each section in the region of a sleeve for the connection of two pipes.

6. The pipeline including status detection apparatus as set forth in one of claims 1 through 5,
wherein the induction coil (5) of each sensor unit (4) is so arranged on the inside of the protective pipe (3) in the 12 o'clock position that its magnetic axis is vertical.

7. An apparatus for status detection of moisture and/or temperature in the heat-insulating layer of a pipeline, comprising:
a sensor device (7) which is adapted to respond to moisture and/or temperature level and in that situation changes its electrical property;
an induction coil (5) which is connected together with the sensor device (7) to form an electrical resonating circuit whose resonance and/or damping properties depend an the electrical property of the sensor device (7); said sensor device (7) said the induction coil (5) forming a sensor (4) which is adapted to co-operate with an interrogation device (20) for the condition of the sensor; and
the interrogation device (20) including a frequency generator (26), an exciter coil (25) and an evaluation device (24) in order by irradiation of electromagnetic energy to detect the resonance and/or damping properties of the sensor resonating circuit.

8. The apparatus as set forth in claim 7,
wherein the induction coil is a flat coil (5).

9. The apparatus as set forth in claim 7 or claim 8,
wherein associated with each sensor (4) is a respective memory having a number identifying the respective sensor unit.

10. The apparatus as set forth in claim 9,
**characterised in that** said sensor means is in the form of a switching arrangement which, upon or after actuation thereof, writes a corresponding item of information into the memory.

11. The apparatus as set forth in one of claims 7 through 10
wherein the sensor means is a thermal switch which responds at a predetermined temperature.

12. The apparatus as set forth in one of claims 7 through 11
**characterised in that** the sensor means (7) includes a switch which is urged into one condition by a spring and that a triggering device which is triggered when wetting occurs brings the switch in the opposite condition.

13. The apparatus as set forth in claim 12,
wherein the switch is a reed switch and the triggered device which triggers when wetting occurs has an actuating solenoid which is urged by the spring into a first position causing the reed switch to respond, and is held in a second position of not influencing the reed switch, against the action of the spring, by a device which becomes ineffective when wetting occurs.

14. The apparatus as set forth in claim 12 or claim 13,
**characterised in that** the switch is disposed in a housing which is not completely sealed off and which is at least partially filled with a moisture-attracting material, in particular silica gel.

15. The apparatus as set forth in one of claims 1 through 8,
**characterised in that** the sensor means (7) includes a moisture-dependent capacitor.

16. The apparatus as set forth in claim 7,
**characterised in that** the interrogation device (20) has a portable computer as the programmable control unit.

## Revendications

1. Conduite avec dispositif de détection d'état, notamment de détection de fuite, possédant les caractéristiques suivantes :
la conduite présente un tuyau interne pour fluides (1) destiné à transporter un fluide, par exemple vapeur d'eau ou eau chaude, une couche d'isolation thermique (2) et un tuyau de protection externe (3), au moins un capteur (4), qui comprend une sonde réagissant à l'humidité et/ou à la température (7) et une bobine d'induction (5), est implanté au niveau de la couche d'isolation thermique (2) ;
la sonde (7) et la bobine d'induction (5) constituent un circuit oscillant dont les caractéristiques de résonance et/ou d'amortissement dépendent de l'état de la sonde (7) suite aux conditions qui règnent dans la couche d'isolation thermique, par exemple l'humidité et la température ;
un dispositif de scrutation (20), qui comprend un générateur de fréquences (26), une bobine d'excitation (25) ainsi qu'un dispositif d'exploitation (24), et peut être mis à proximité du capteur (4) pour le soumettre à un rayonnement électromagnétique de sorte à détecter les caractéristiques de résonance et/ou d'amortissement du circuit oscillant du capteur.

2. Conduite avec dispositif de détection d'état selon la revendication 1,
possédant les caractéristiques supplémentaires suivantes :
une multitude de tuyaux pour fluides (1) ;
des couches d'isolation thermique (2) et des tuyaux de protection (3) sont posés pour au moins une longueur de tuyau qui comprend une multitude de capteurs (4) ;
une multitude de dispositifs de scrutation (20) qui sont reliés entre eux et à un dispositif d'exploitation central (31) par un câble (30) ; chaque dispositif de scrutation (20) possède des dispositifs d'émission et de réception d'adresse (22, 23) ainsi qu'une mémoire pour une adresse individuelle ;
le dispositif d'exploitation central (31) possède des moyens pour émettre les adresses individuelles des dispositifs de scrutation (20) ;
le dispositif de réception d'adresse (23) du dispositif de scrutation (20) adressé est en mesure d'activer le générateur de fréquences (26) pour appliquer à la bobine d'excitation (25) du dispositif de scrutation concerné un signal d'excitation dont la fréquence peut être modifiée ;
le dispositif d'exploitation (24) du dispositif de scrutation (20) concerné est conçu pour détecter une résonance entre la bobine d'excitation (25) et la bobine d'induction (5) ainsi que pour activer le dispositif d'émission (22).

3. Conduite avec dispositif de détection d'état selon la revendication 2, où une unité de mémoire et de traitement (32) est connectée au dispositif d'exploitation central (31).

4. Conduite avec dispositif de détection d'état selon la revendication 3, où l'unité de mémoire et de traitement (32) possède des comparateurs permettant de comparer les données provenant du dispositif d'exploitation central (31) avec des seuils d'alarme.

5. Conduite avec dispositif de détection d'état selon l'une des revendications 1 à 4, où la conduite est constituée d'une multitude de tuyaux et est cloisonnée en sections étanches séparées par une cloison étanche placée à une extrémité de chaque tuyau entre le tuyau pour fluides (1) et le tuyau de protection (3) et où un capteur (4) est disposé dans chaque section au niveau d'un raccord de liaison entre deux tuyaux.

6. Conduite avec dispositif de détection d'état selon l'une des revendications 1 à 5,
**caractérisée par le fait que** la bobine d'induction (5) de chaque capteur (4) est disposée à la position 12 heures sur la face interne du tuyau de protection (3) de sorte que son axe magnétique soit vertical.

7. Dispositif de détection d'état de l'humidité et/ou de la température dans la couche d'isolation thermique d'une conduite présentant les caractéristiques suivantes :
une sonde (7) est conçue pour réagir à l'humidité et/ou la température en modifiant sa caractéristique électrique ;
une bobine d'induction (5) est connectée à la sonde (7) de sorte à constituer un circuit électrique oscillant dont les caractéristiques de résonance et/ou d'amortissement dépendent de la caractéristique électrique de la sonde (7) ;
sonde (7) et bobine d'induction (5) constituent un capteur (4) qui est conçu pour collaborer avec un dispositif de scrutation (20) de l'état du capteur ; le dispositif de scrutation (20) comprend un générateur de fréquences (26), une bobine d'excitation (25) ainsi qu'un dispositif d'exploitation (24) pour détecter les propriétés de résonance et/ou d'amortissement du circuit oscillant du capteur par rayonnement d'énergie électromagnétique.

8. Dispositif selon la revendication 7,
**caractérisé par le fait que** la bobine d'induction (5) est une bobine plate.

9. Dispositif selon les revendications 7 ou 8,
**caractérisé par le fait qu'**une mémoire avec un numéro caractérisant le capteur correspondant est affectée à chaque capteur (4).

10. Dispositif selon la revendication 9,
**caractérisé par le fait que** la sonde (7) est constituée en tant que dispositif de commutation qui écrit une information correspondante dans la mémoire lors de ou après son actionnement.

11. Dispositif selon l'une des revendications 7 à 10,
**caractérisé par le fait que** la sonde (7) est un interrupteur thermostatique qui se déclenche à une température donnée.

12. Dispositif selon l'une des revendications 7 à 11,
**caractérisé par le fait que** la sonde (7) contient un interrupteur repoussé dans un état de commutation par un ressort et qu'un dispositif déclenché par la pénétration de l'humidité maintient l'interrupteur dans l'état de commutation opposé.

13. Dispositif selon la revendication 12,
**caractérisé par le fait que** l'interrupteur est un interrupteur à lames (de Reed) et que le dispositif déclenché par la pénétration de l'humidité présente un aimant de commande qui est repoussé par le ressort dans une première position déclenchant l'interrupteur à lames, et qui est maintenu dans une deuxième position sans influence sur l'interrupteur à lames par un dispositif opposé à l'action du ressort, ce dernier dispositif étant rendu inefficace par la pénétration de l'humidité.

14. Dispositif selon la revendication 12 ou 13,
**caractérisé par le fait que** l'interrupteur se trouve dans un boîtier non entièrement étanche qui est au moins partiellement rempli d'un matériau hydrophile, notamment du gel de silicate.

15. Dispositif selon l'une des revendications 1 à 8,
**caractérisé par le fait que** la sonde (7) comprend un condensateur dépendant de l'humidité.

16. Dispositif selon la revendication 7, **caractérisé par le fait que** le dispositif de scrutation (20) comprend un ordinateur portable comme unité de commande programmable.
